# FASCICULE DE BREVET EUROPEEN

(11) **EP 4 323 631 B1**
(45) Date de publication et mention de la délivrance du brevet: **25.02.2026**
(21) Numéro de dépôt: 22721417.8
(22) Date de dépôt: 08.04.2022
(51) Int. Cl.: F02K 1/72

(54) **INVERSEUR DE POUSSEE A GRILLES MOBILES COMPRENANT UNE STRUCTURE FIXE PLURIFONCTIONNELLE**
SCHUBUMKEHRVORRICHTUNG MIT BEWEGLICHER KASZADE MIT EINER MULTIFUNKTIONALEN FESTEN STRUKTUR
MOVABLE-CASCADE THRUST REVERSER COMPRISING A MULTI-FUNCTIONAL FIXED STRUCTURE

(30) Priorité: 13.04.2021 FR 2103775
(43) Date de publication de la demande: 21.02.2024
(73) Titulaire: Safran Nacelles, 76700 Gonfreville-l'Orcher (FR)
(72) Inventeur: BOILEAU, Patrick André, 77550 MOISSY-CRAMAYEL (FR); FERRIER, Gina, 77550 MOISSY-CRAMAYEL (FR); JOURDAN, Fabien, 77550 MOISSY-CRAMAYEL (FR); CAZUC, Xavier, 77550 MOISSY-CRAMAYEL (FR)
(74) Mandataire: Santarelli
(86) Numéro de dépôt international: PCT/FR2022/050660
(87) Numéro de publication internationale: WO 2022/219270

(56) Documents cités:
- FR-A1- 2 978 497
- FR-A1- 2 980 173
- FR-A1- 3 031 725
- FR-A1- 3 074 225
- FR-A1- 3 100 577

## Description

### Domaine technique

L'invention se rapporte au domaine des inverseurs de poussée pour ensemble propulsif d'aéronef et, plus particulièrement, aux inverseurs à grilles mobiles.

### État de la technique antérieure

Les inverseurs à grilles actuellement exploités dans le secteur aéronautique comprennent un cadre avant formant avec les grilles une partie fixe de l'inverseur destinée à être reliée à un carter de turbomachine.

Au courant de la dernière décennie, des développements techniques ont permis de mettre au point des inverseurs à grilles mobiles, tels que décrits par exemple dans les documents FR2981989A1, FR2999239A1, FR3002785A1, FR3100577A1, FR2978497A1, FR2980173A1 et FR3073572A1.

Par rapport à un inverseur à grilles fixes conventionnel, la mobilité des grilles permet de réduire la longueur de la nacelle et par conséquent sa masse et la traînée qu'elle génère.

Les inverseurs à grilles mobiles connus dans l'état de la technique antérieure ne comprennent pas de cadre avant et plusieurs fonctions de ces inverseurs, telles que le guidage des grilles, la déviation du flux d'inversion à l'avant des grilles ou encore le guidage radial de fourreaux de vérins, sont assurées pas des organes fixés sur la turbomachine.

Il en résulte une architecture relativement complexe et volumineuse.

### Exposé de l'invention

Un but de l'invention est de procurer un inverseur à grilles mobiles présentant une architecture simplifiée et/ou plus compacte.

Un autre but de l'invention est de réduire la masse et le coût d'un inverseur à grilles mobiles.

A cet effet, l'invention a pour objet un inverseur de poussée pour ensemble propulsif d'aéronef, selon les caractéristiques de la revendication 1.

Une telle structure fixe permet de relier l'inverseur à une turbomachine d'ensemble propulsif de manière simple tout en réduisant l'encombrement global de l'inverseur.

Une telle structure fixe permet en outre de mutualiser plusieurs fonctions de l'inverseur et de simplifier l'architecture générale de l'inverseur, notamment en fonctionnalisant davantage la structure fixe, intégrant à présent un bord de déviation.

L'invention permet ainsi de réduire la masse et le coût de l'inverseur.

Il est à noter qu'une telle mobilité du capot se retrouve notamment dans un inverseur présentant une architecture dite « en D », connue sous l'appellation anglo-saxonne « D-Duct ».

La structure fixe comprend de préférence une poutre supérieure configurée pour coopérer avec le capot de manière à pouvoir transmettre des efforts du capot au carter du turboréacteur et/ou du capot à un mât de l'ensemble propulsif.

Dans un mode de réalisation, la structure fixe comprend des éléments de guidage des grilles entre la position avancée et la position reculée.

Lorsque la structure fixe comprend la poutre supérieure précitée, celle-ci peut porter l'un au moins desdits éléments de guidage.

Selon une variante de réalisation, la poutre inférieure peut porter l'un au moins des éléments de guidage précités.

Dans un mode de réalisation, la structure fixe comporte des organes formant des butées radiales et/ou tangentielles et/ou axiales pour les grilles.

La structure fixe de l'invention peut bien entendu former ou porter d'autres organes ou éléments que ceux décrits ci-dessus, afin d'assurer des fonctions supplémentaires ou complémentaires de l'inverseur ou de l'ensemble propulsif.

L'invention a aussi pour objet un ensemble propulsif pour aéronef, comprenant une turbomachine et un inverseur tel que défini ci-dessus.

Dans un mode de réalisation, ledit carter est formé par un carter de soufflante de la turbomachine ou par un carter intermédiaire s'étendant axialement en arrière du carter de soufflante.

D'autres avantages et caractéristiques de l'invention apparaîtront à la lecture de la description détaillée, non limitative, qui suit.

### Brève description des dessins

La description détaillée qui suit fait référence aux dessins annexés sur lesquels :
[Fig. 1] est une demi-vue schématique en coupe longitudinale d'un ensemble propulsif, comprenant un inverseur conforme à l'invention en configuration de poussée directe ;
[Fig. 2] est une demi-vue schématique en coupe longitudinale de l'ensemble propulsif de la figure 1, l'inverseur étant en configuration d'inversion de poussée ;
[Fig. 3] est une vue schématique en perspective d'une partie d'un ensemble propulsif similaire à celui de la figure 1, montrant une turbomachine, un mât et une structure fixe d'un inverseur conforme à l'invention ;
[Fig. 4] est une vue schématique en perspective d'une partie de l'ensemble propulsif de la figure 3, faisant apparaître des grilles et un capot de l'inverseur ;
[Fig. 5] est une vue schématique en perspective éclatée de l'inverseur de l'ensemble propulsif de la figure 3 ;
[Fig. 6] est une vue schématique en perspective de la structure fixe de l'inverseur de l'ensemble propulsif de la figure 3 ;
[Fig. 7] est une vue schématique en perspective et en coupe longitudinale d'un carter de soufflante, d'un carter intermédiaire et de la structure fixe de l'inverseur de l'ensemble propulsif de la figure 3 ;
[Fig. 8] est une vue schématique en perspective d'une partie inférieure, à six heures, de l'ensemble propulsif de la figure 3 ;
[Fig. 9] est une vue schématique en perspective d'une poutre supérieure de la structure fixe de l'inverseur de l'ensemble propulsif de la figure 3 ;
[Fig. 10] est une vue schématique en perspective d'une partie supérieure, à douze heures, de l'ensemble propulsif de la figure 3 ;
[Fig. 11] est une vue schématique en perspective d'une partie de l'ensemble propulsif de la figure 3, montrant un rail de guidage de grilles ;
[Fig. 12] est une vue schématique en perspective d'une partie d'un carter de l'ensemble propulsif de la figure 3, montrant des butées de positionnement radial des grilles ;
[Fig. 13] est une demi-vue schématique en coupe longitudinale d'une partie de l'ensemble propulsif de la figure 3, montrant une butée axiale et radiale de positionnement des grilles en configuration d'inversion de poussée.

### Description détaillée de modes de réalisation

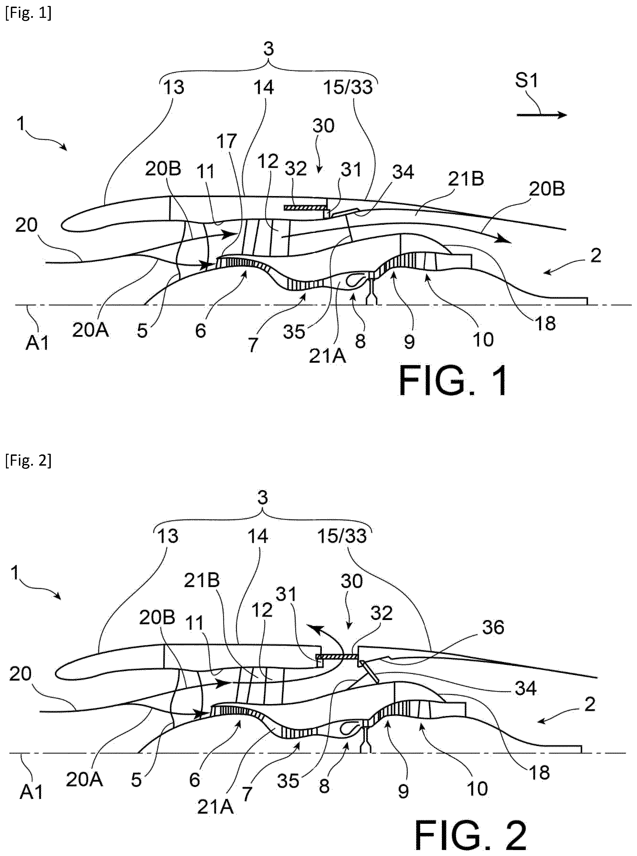

Il est représenté sur les figures 1 et 2 un ensemble propulsif 1 d'aéronef présentant un axe central longitudinal A1.

Par la suite, les termes « avant » et « arrière » sont définis relativement à un sens S1 d'écoulement des gaz à travers l'ensemble propulsif 1 le long de l'axe A1 lorsque celui-ci génère une poussée.

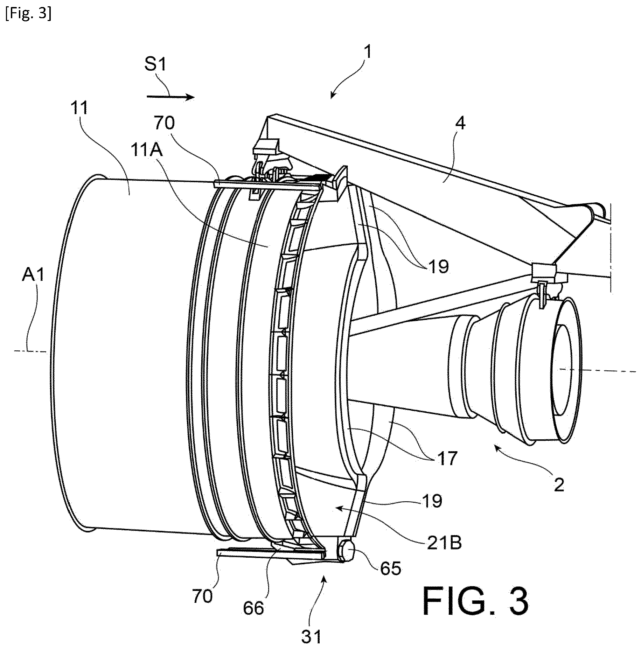

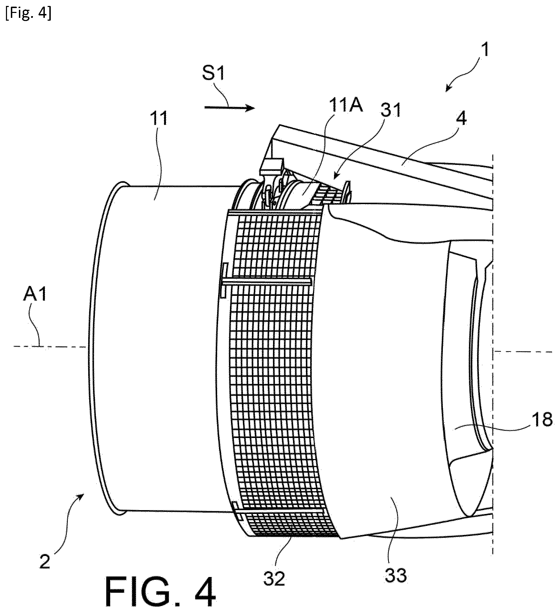

L'ensemble propulsif 1 comprend une turbomachine 2, une nacelle 3 ainsi qu'un mât - non visible sur les figures 1 et 2 (voir mât 4 sur les figures 3 et 4) - destiné à relier l'ensemble propulsif 1 à une aile (non représentée) de l'aéronef.

La turbomachine 2 est dans cet exemple un turboréacteur à double flux comprenant, de l'avant vers l'arrière, une soufflante 5, un compresseur basse pression 6, un compresseur haute pression 7, une chambre de combustion 8, une turbine haute pression 9 et une turbine basse pression 10. Les compresseurs 6 et 7, la chambre de combustion 8 et les turbines 9 et 10 forment un générateur de gaz.

Le turboréacteur 2 est doté d'un carter de soufflante 11 relié au générateur de gaz par des bras structuraux 12.

La nacelle 3 comprend une section avant formant une entrée d'air 13, une section médiane qui comporte des capots de soufflante 14 enveloppant le carter de soufflante 11 et une section arrière 15.

En fonctionnement, un écoulement d'air 20 pénètre dans l'ensemble propulsif 1 par l'entrée d'air 13, traverse la soufflante 5 puis se divise en un flux primaire 20A et un flux secondaire 20B. Le flux primaire 20A s'écoule dans une veine primaire 21A de circulation de gaz traversant le générateur de gaz. Le flux secondaire 20B s'écoule dans une veine secondaire 21B entourant le générateur de gaz.

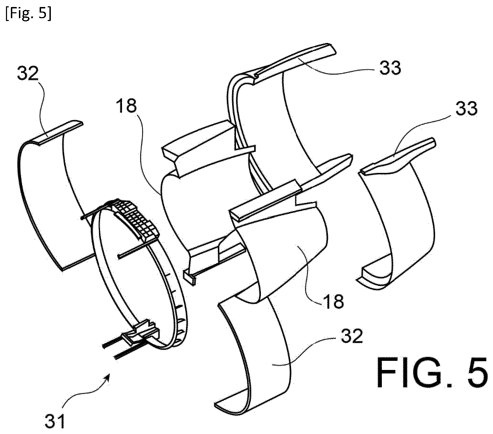

La veine secondaire 21B est délimitée radialement vers l'intérieur par un carénage interne fixe qui enveloppe le générateur de gaz. Dans cet exemple, le carénage interne fixe comprend un premier tronçon 17 (voir figures 1 et 3) appartenant à la section médiane 14 et un deuxième tronçon 18 (voir figures 1, 4 et 5) s'étendant vers l'arrière à partir du premier tronçon 17 de manière à former une partie de la section arrière 15.

Radialement vers l'extérieur, la veine secondaire 21B est délimitée par le carter de soufflante 11 et, dans la configuration de la figure 1, par des capots mobiles formant la section arrière 15 de la nacelle 3 (voir plus loin ci-dessous).

La nacelle 3 comprend un inverseur de poussée 30 comprenant d'une part une structure fixe 31 solidaire du carter de soufflante 11 selon des principes détaillés ci-dessous et, d'autre part, une structure mobile par rapport à la structure fixe 31.

La structure mobile de l'inverseur 30 comprend des grilles de déviation 32, les capots mobiles 33 précités, des volets d'obturation 34 et des biellettes 35.

La figure 1 montre l'inverseur 30 dans une configuration de poussée directe.

Dans cette configuration, les capots mobiles 33 sont dans une position de fermeture, ou position avancée, dans laquelle ils sont sensiblement en appui sur la structure fixe 31 et dans laquelle les grilles 32 sont logées dans un espace délimité radialement par le carter de soufflante 11 d'une part et par les capots de soufflante 14 d'autre part.

En configuration de poussée directe, les volets d'obturation 34 sont rétractés au sein d'une cavité 36 (voir figure 2) formée par les capots mobiles 33.

L'inverseur 30 permet ainsi de canaliser le flux secondaire 20B vers l'arrière de l'ensemble propulsif 1 de manière à générer une poussée.

Dans la configuration de la figure 1, les grilles 32 et les capots mobiles 33, qui sont solidaires les uns des autres, sont dans une position dite de poussée directe.

La figure 2 montre l'inverseur 30 dans une configuration d'inversion de poussée.

Dans cette configuration, les capots mobiles 33 sont dans une position d'ouverture, ou position reculée, dans laquelle ils sont longitudinalement éloignés de la structure fixe 31 de manière à définir une ouverture radiale de la veine secondaire 21B. Les grilles 32 s'étendent à travers cette ouverture radiale.

En configuration d'inversion de poussée, les volets d'obturation 34 sont déployés radialement dans la veine secondaire 21B de manière à diriger le flux secondaire 20B vers les grilles 32 lesquelles permettent d'orienter le flux ainsi redirigé vers l'avant de l'ensemble propulsif 1 afin de générer une contre-poussée.

Dans la configuration de la figure 2, les grilles 32 et les capots mobiles 33 sont dans une position dite d'inversion de poussée.

L'invention se rapporte plus spécifiquement à la structure fixe 31 de l'inverseur 30.

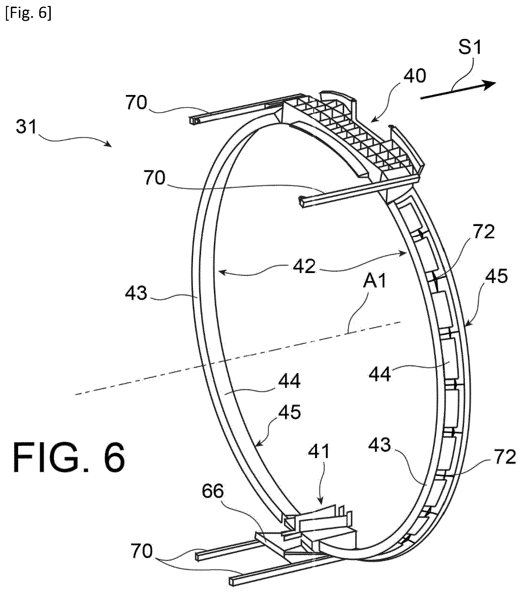

En référence à la figure 6 qui illustre un mode de réalisation non limitatif de l'invention, la structure fixe 31 présente une forme globalement annulaire s'étendant autour de l'axe A1.

Dans cet exemple, la structure fixe 31 a une forme de courbe fermée et forme donc un anneau.

Dans des modes de réalisation non représentés, la structure fixe peut avoir une forme de courbe non fermée, par exemple de manière à former une partie d'un anneau ou plusieurs parties configurées pour présenter ensemble une forme globalement annulaire.

La structure fixe 31 de la figure 6 comprend une poutre supérieure 40 destinée à s'étendre à douze heures, c'est-à-dire circonférentiellement au niveau du mât 4 de l'ensemble propulsif 1, une poutre inférieure 41 destinée à s'étendre à six heures, c'est-à-dire à l'opposé du mât 4, et deux secteurs circonférentiels 42 reliant chacun la poutre supérieure 40 et la poutre inférieure 41 l'une à l'autre.

Chacun des secteurs circonférentiels 42 comprend une extrémité avant 43 formant une bride radiale et une partie 44 s'étendant axialement depuis l'extrémité avant 43 de manière à former une extrémité arrière 45 du secteur circonférentiel 42 correspondant.

En référence aux figures 6 à 8, la bride radiale 43 formée par les secteurs circonférentiels 42 est configurée pour venir en appui sur une bride radiale 50 formée dans cet exemple par une extrémité arrière d'un carter intermédiaire 11A qui prolonge le carter de soufflante 11 de la turbomachine 2 de manière à fixer selon une liaison rigide la structure fixe 31 de l'inverseur 30 à ce carter 11A.

La turbomachine 2 peut alternativement être dépourvue de carter intermédiaire 11A auquel cas la structure fixe 31 peut être reliée de manière analogue directement au carter de soufflante 11 (non représenté). La description qui suit s'applique par analogie à une telle alternative.

Par définition, une liaison rigide est une liaison assurant aux pièces assemblées une position relative bien déterminée, constante dans le temps, quelles que soient la nature et l'intensité des sollicitations extérieures, dans des conditions normales d'utilisation.

La structure fixe 31 de l'inverseur 30 est par conséquent solidaire du carter de soufflante 11 de la turbomachine 2, à la fois en translation et en rotation autour de l'axe A1.

Dans cet exemple, les brides radiales 43 et 50 sont reliées l'une à l'autre par rivetage.

Les brides radiales 43 et 50 peuvent être reliées l'une à l'autre par d'autres types de moyens de liaison, par exemple par boulonnage.

En référence aux figures 3, 7 et 8, la structure fixe 31 de l'inverseur 30 forme ainsi une extension axiale du carter 11A.

Dans cet exemple, la partie 44 des secteurs circonférentiels 42 forme une surface interne 46 qui délimite ainsi un tronçon de la veine secondaire 21B lorsque l'inverseur 30 est en configuration d'inversion de poussée.

Dans cet exemple, la surface interne 46 des secteurs circonférentiels 42 est radialement évasée, c'est-à-dire qu'elle s'éloigne progressivement de l'axe A1 depuis la bride radiale 43 jusqu'à l'extrémité arrière 45, et forme un bord de déviation.

La forme incurvée du bord de déviation 46 permet, par effet Coanda, d'initier le changement de direction du flux destiné à passer à travers les grilles 32 pour l'inversion de poussée.

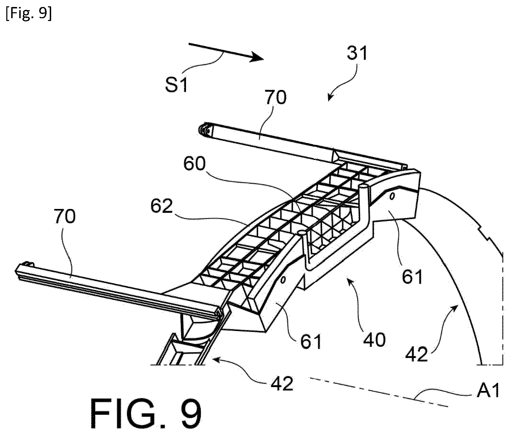

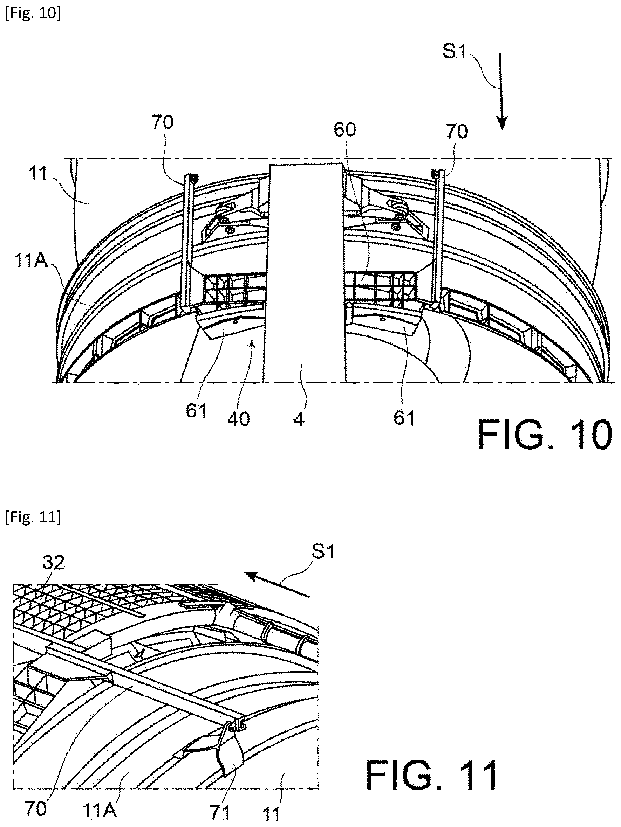

En référence aux figures 9 et 10, la poutre supérieure 40 comprend un module 60 en treillis s'étendant circonférentiellement de sorte à s'étendre de part et d'autre du mât 4.

La poutre supérieure 40 comprend aussi deux brides radiales 61 formant une extrémité arrière de celle-ci.

Les brides radiales 61 sont destinées à relier la structure fixe 31 à des poutres (non représentées) solidaires du mât 4 et s'étendant chacune de part et d'autre du mât 4. Ces poutres et les brides radiales 61 sont notamment configurées pour supporter les capots mobiles 33 de l'inverseur 30.

Le module 60 de la poutre supérieure 40 forme une extrémité avant 62 qui prolonge circonférentiellement la bride radiale 43 des secteurs circonférentiels 42 afin de coopérer avec la bride radiale 50 du carter 11A.

La poutre supérieure 40 assure ainsi un rôle d'interface et de liaison structurale avec le mât 4, le carter 11A et les capots mobiles 33.

La poutre supérieure 40 peut aussi permettre d'assurer des fonctions d'étanchéité, de passage de servitudes et de ségrégation de zones feu et de ventilation.

Dans cet exemple, le carénage interne fixe 17 comprend de manière connue en soi des bras de liaison 19 à douze heures et à six heures (voir figure 3).

En continuité circonférentielle avec les secteurs circonférentiels 42 de la structure fixe 31, la poutre supérieure 40 délimite, de part et d'autre des bras de liaison 19 à douze heures, une portion respective de la veine secondaire 21B.

Par ailleurs, l'inverseur 30 présente dans cet exemple une architecture en D, bien connue dans le domaine de l'invention, les capots mobiles 33 étant articulés auxdites poutres solidaires du mât 4 de manière à pouvoir être déplacés en papillon entre une position fermée de vol et une position ouverte de maintenance.

La poutre inférieure 41 de la structure fixe 31, visible sur les figures 3, 6 et 8, présente un intérêt particulier pour une telle architecture en D.

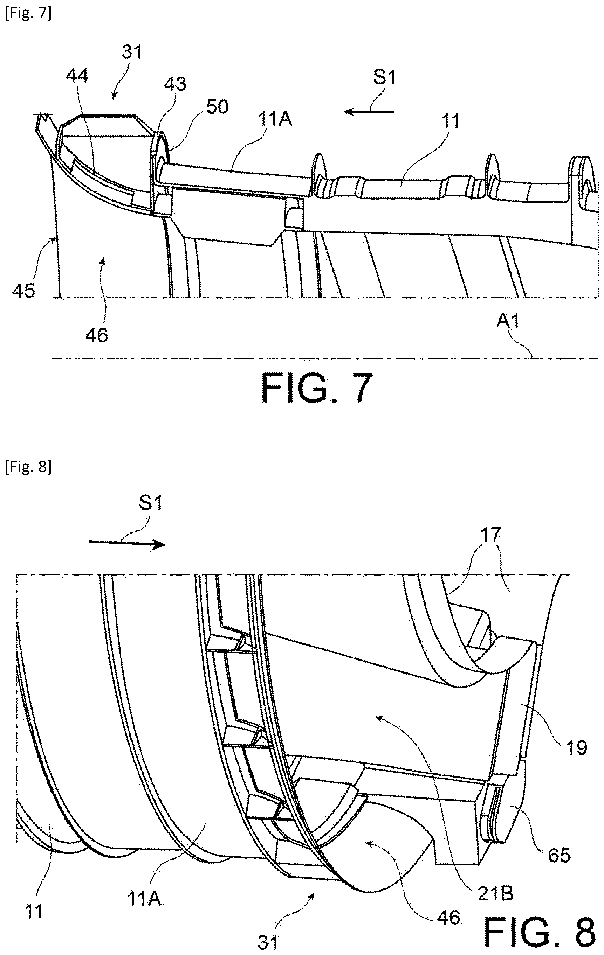

En particulier, la poutre inférieure 41 comprend un organe 65 de liaison et de positionnement des capots mobiles 33 en position de vol (figures 3 et 8).

La poutre inférieure 41 comprend aussi un élément de fixation 66 (figures 3 et 6) permettant de solidariser la poutre inférieure 41 au carter 11A.

La poutre inférieure 41 assure ainsi un rôle d'interface et de liaison structurale avec le carter 11A et les capots mobiles 33.

De manière analogue à la poutre supérieure 40, la poutre inférieure 41 délimite, de part et d'autre des bras de liaison 19 à six heures, une portion respective de la veine secondaire 21B (voir figure 8) et permet d'assurer des fonctions d'étanchéité et de passage de servitudes.

L'inverseur 30 comprend des éléments de guidage des grilles 32 lors de leur déplacement entre les positions avancée et reculée.

De manière générale, les éléments de guidage peuvent comprendre des pistes de guidage et/ou des rails et/ou des galets reliés au carter de soufflante 11 et/ou au carter intermédiaire 11A et/ou à la structure fixe 31 de l'inverseur 30.

Dans cet exemple, les éléments de guidage comprennent des rails 70 dont deux sont solidaires de la poutre supérieure 40 et deux autres solidaires de la poutre inférieure 41 de la structure fixe 31 de l'inverseur 30 (voir figures 3, 6, 9 et 10).

Dans cet exemple, les rails 70 sont fixés à la structure fixe 31 par leur extrémité arrière et au carter 11A par leur extrémité avant, par l'intermédiaire de ferrures 71 telles que celle illustrée à la figure 11.

Alternativement, l'extrémité avant des rails 70 peut s'étendre en porte-à-faux ou encore être reliée au carter de soufflante 11 ou à la structure fixe 31 par l'intermédiaire de ferrures et/ou de bielles et/ou de tout autre moyen de liaison (modes de réalisation non représentés).

Les rails 70 assurent ainsi une fonction de guidage des grilles 32 ainsi que, en configuration d'inversion de poussée, une fonction de reprise d'efforts aérodynamiques, principalement radiaux et tangentiels.

Bien entendu, en fonction des dimensions des grilles 32 et des efforts à reprendre, l'inverseur 30 peut comprendre des rails supplémentaires et/ou autrement configurés.

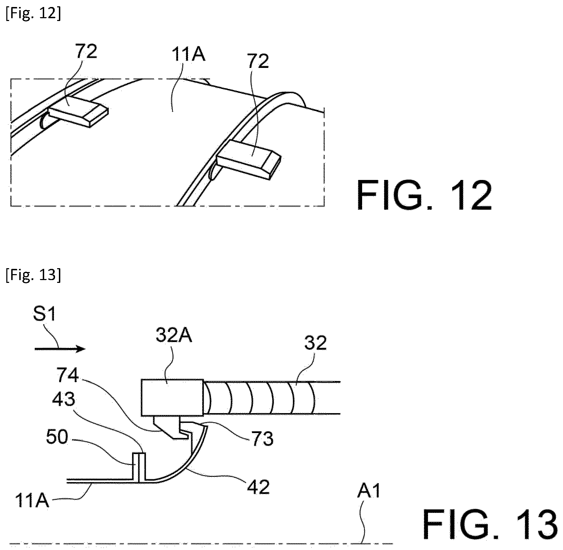

La figure 12 montre des patins de contact 72 fixés au carter 11A et permettant de positionner radialement les grilles 32, de reprendre des efforts principalement radiaux auxquels elles sont soumises et/ou de rattraper des jeux, en particulier en configuration de poussée directe.

De tels patins de contact 72 forment ainsi des butées radiales qui peuvent être régulièrement répartis autour de l'axe A1.

Dans l'exemple de la figure 6, la structure fixe 31 de l'inverseur 30 comporte de tels patins de contact 72 montés sur la surface externe de la partie 44 des secteurs circonférentiels 42.

Dans le mode de réalisation de la figure 13, les secteurs circonférentiels 42 de la structure fixe 31 de l'inverseur 30 forment une bride axiale 73 et les grilles 32 comprennent une butée 74, portée dans cet exemple par un cadre avant 32A des grilles 32.

La butée 74 des grilles 32 est configurée pour coopérer avec la bride axiale 73 de la structure fixe 31 lorsque les grilles 32 sont en position reculée, de manière à former une butée axiale de fin de course et radiale apte à réduire la déformation des grilles 32.

Dans un mode de réalisation non représenté, la structure fixe 31 de l'inverseur 30 et/ou le carter 11 et/ou 11A peuvent comprendre des butées tangentielles pour les grilles 32 en position avancée et/ou en position reculée.

De telles butées axiales et/ou radiales et/ou circonférentielles permettent d'améliorer la répartition et la reprise des efforts des grilles 32 et de réduire le chargement de vérins (non représentés) de déplacement des grilles 32 et des capots mobiles 33, notamment en configuration d'inversion de poussée dans laquelle les vérins sont typiquement en fin de course.

Dans cet exemple, la structure fixe 31 de l'inverseur 30 comprend des organes (non représentés) permettant de supporter les vérins et d'optimiser ainsi le chemin d'effort lors du changement de configuration de l'inverseur 30.

La description qui précède illustre le principe de plurifonctionnalité de la structure fixe 31 de l'invention qui permet de réduire la compacité de l'inverseur 30 ainsi que la masse et le coût de l'ensemble propulsif 1.

Bien entendu, l'invention n'est pas limitée aux modes de réalisation décrits ci-dessus. Par exemple, l'inverseur 30 peut présenter une architecture en C ou en O et sa structure fixe 31 être dépourvue de poutre inférieure 41.

## Revendications

1. Inverseur de poussée (30) pour ensemble propulsif (1) d'aéronef, présentant un axe central longitudinal (A1) et comprenant une structure fixe (31), au moins un capot (33) et des grilles de déviation (32), le capot (33) et les grilles (32) étant mobiles par rapport à la structure fixe (31) en translation le long de l'axe central longitudinal (A1) entre une position avancée de poussée directe et une position reculée d'inversion de poussée, où la structure fixe (31) a une forme annulaire s'étendant autour de l'axe central longitudinal (A1) et est configurée pour être fixée selon une liaison rigide sur une extrémité arrière (50) d'un carter (11A) de turbomachine (2) de l'ensemble propulsif (1) de manière à former une extension axiale de ce carter (11A), et **caractérisé en ce que** la structure fixe (31) forme un bord de déviation pour un écoulement d'air destiné à traverser les grilles (32) lorsque le capot (33) et les grilles (32) sont en position d'inversion de poussée, le capot (33) étant mobile en rotation autour d'un axe de pivot entre une position fermée de vol et une position ouverte de maintenance, la structure fixe (31) comprenant une poutre inférieure (41) configurée pour coopérer avec le capot (33) lorsque celui-ci est en position fermée.

2. Inverseur (30) selon la revendication 1, dans lequel la structure fixe (31) comprend une poutre supérieure (40) configurée pour coopérer avec le capot (33) de manière à pouvoir transmettre des efforts du capot (33) au carter (11A) du turboréacteur (2) et/ou du capot (33) à un mât (4) de l'ensemble propulsif (1).

3. Inverseur (30) selon la revendication 1 ou 2, dans lequel la structure fixe (31) comprend des éléments de guidage (70) des grilles (32) entre la position avancée et la position reculée.

4. Inverseur (30) selon les revendications 2 et 3, dans lequel la poutre supérieure (40) porte l'un au moins desdits éléments de guidage (70).

5. Inverseur (30) selon l'une quelconque des revendications 1 à 4, dans lequel la poutre inférieure (41) porte l'un au moins desdits éléments de guidage (70).

6. Inverseur (30) selon l'une quelconque des revendications 1 à 5, dans lequel la structure fixe (31) comporte des organes (72, 73, 74) formant des butées radiales et/ou tangentielles et/ou axiales pour les grilles (32).

7. Ensemble propulsif (1) pour aéronef, comprenant une turbomachine (2) et un inverseur selon l'une quelconque des revendications 1 à 6.

8. Ensemble propulsif (1) selon la revendication 7, dans lequel ledit carter est formé par un carter de soufflante (11) de la turbomachine (2) ou par un carter intermédiaire (11A) s'étendant axialement en arrière du carter de soufflante (11).

## Patentansprüche

1. Schubumrichter (30) für eine Flugzeugantriebseinheit (1), der eine Längsmittelachse (A1) besitzt und eine feste Struktur (31), mindestens eine Haube (33) und Umlenkgitter (32) umfasst, wobei die Haube (33) und die Gitter (32) beweglich gegenüber der festen Struktur (31) sind, die sich entlang der Längsmittelachse (A1) zwischen einer vorgeschobenen Position des direkten Schubs und einer zurückgezogenen Position der Schubumkehr bewegt, wobei die feste Struktur (31) eine ringförmige Form aufweist, die sich um die Längsmittelachse (A1) erstreckt, und so eingerichtet ist, dass sie gemäß einer starren Verbindung an einem hinteren Ende (50) eines Gehäuses (11A) einer Turbomaschine (2) der Antriebseinheit (1) befestigt ist, um eine axiale Erweiterung dieses Gehäuses (11A) zu bilden, und **dadurch gekennzeichnet ist, dass** die feste Struktur (31) eine Umlenkkante für einen Luftstrom bildet, der zum Durchströmen der Gitter (32) bestimmt ist, wenn sich die Haube (33) und die Gitter (32) in der Schubumkehrposition befinden, wobei die Haube (33) um eine Schwenkachse zwischen einer geschlossenen Flugposition und einer offenen Wartungsposition drehbar ist, wobei die feste Struktur (31) einen unteren Träger (41) umfasst, der so eingerichtet ist, dass er mit der Haube (33) zusammenwirkt, wenn diese sich in der geschlossenen Position befindet.

2. Umrichter (30) nach Anspruch 1, wobei die feste Struktur (31) einen oberen Träger (40) umfasst, der so eingerichtet ist, dass er mit der Haube (33) zusammenwirkt, um Kräfte von der Haube (33) auf das Gehäuse (11A) des Turboreaktors (2) und/oder von der Haube (33) auf einen Mast (4) der Antriebseinheit (1) übertragen zu können.

3. Umrichter (30) nach Anspruch 1 oder 2, wobei die feste Struktur (31) Führungselemente (70) der Gitter (32) zwischen der vorgeschobenen und der zurückgeschobenen Position umfasst.

4. Umrichter (30) nach Anspruch 2 und 3, wobei der obere Träger (40) mindestens eines der Führungselemente (70) trägt.

5. Umrichter (30) nach einem der Ansprüche 1 bis 4, wobei der untere Träger (41) mindestens eines der Führungselemente (70) trägt.

6. Umrichter (30) nach einem der Ansprüche 1 bis 5, wobei die feste Struktur (31) Elemente (72, 73, 74) aufweist, die radiale und/oder tangentiale und/oder axiale Anschläge für die Gitter (32) bilden.

7. Antriebseinheit (1) für Flugzeuge, umfassend eine Turbomaschine (2) und einen Umrichter nach einem der Ansprüche 1 bis 6.

8. Antriebseinheit (1) nach Anspruch 7, wobei das Gehäuse durch ein Gebläsegehäuse (11) der Turbomaschine (2) oder durch ein sich axial hinter dem Gebläsegehäuse (11) erstreckendes Zwischengehäuse (11A) gebildet ist.

## Claims

1. Thrust reverser (30) for an aircraft propulsion unit (1), having a longitudinal central axis (A1) and comprising a fixed structure (31), at least one cowl (33) and deflection cascades (32), the cowl (33) and the cascades (32) being movable relative to the fixed structure (31) in translation along the longitudinal central axis (A1) between a forward direct thrust position and a retracted reverse thrust position, wherein the fixed structure (31) has an annular shape extending about the longitudinal central axis (A1) and is configured to be fastened along a rigid connection onto a rear end (50) of a casing (11A) of a turbine engine (2) of the propulsion unit (1) so as to form an axial extension of this casing (11A), and **characterized in that** the fixed structure (31) forms a deflection edge for an air flow intended to pass through the cascades (32) when the cowl (33) and the cascades (32) are in the reverse thrust position, the cowl (33) being rotatable about a pivot axis between a closed flying position and an open maintenance position, the fixed structure (31) comprising a lower beam (41) configured to cooperate with the cowl (33) when the latter is in the closed position.

2. Reverser (30) according to claim 1, wherein the fixed structure (31) comprises an upper beam (40) configured to cooperate with the cowl (33) so as to be able to transmit loads from the cowl (33) to the casing (11A) of the turbine engine (2) and/or from the cowl (33) to a mast (4) of the propulsion unit (1).

3. Reverser (30) according to claim 1 or 2, wherein the fixed structure (31) comprises elements (70) for guiding the cascades (32) between the forward position and the retracted position.

4. Reverser (30) according to claims 2 and 3, wherein the upper beam (40) bears at least one of said guiding elements (70).

5. Reverser (30) according to any one of claims 1 to 4, wherein the lower beam (41) bears at least one of said guiding elements (70).

6. Reverser (30) according to any one of claims 1 to 5, wherein the fixed structure (31) includes members (72, 73, 74) forming radial and/or tangential and/or axial stops for the cascades (32).

7. Propulsion unit (1) for an aircraft, comprising a turbine engine (2) and a reverser according to any one of claims 1 to 6.

8. Propulsion unit (1) according to claim 7, wherein said casing is formed by a fan casing (11) of the turbine engine (2) or by an intermediate casing (11A) extending axially to the rear of the fan casing (11).
